# EUROPEAN PATENT APPLICATION

(11) **EP 1 496 711 A1**
(43) Date of publication of application: **12.01.2005**
(21) Application number: 03746177.9
(22) Date of filing: 16.04.2003
(51) Int. Cl.: H04Q 7/22, H04L 12/28

(54) **HANDOVER CONTROL METHOD**

(30) Priority: 17.04.2002 JP 2002114065
(71) Applicant: NEC Corporation, Minato-ku, Tokyo 108-8001 (JP)
(72) Inventor: SUDA, Yukinori, NEC Corporation, Tokyo 108-8001 (JP)
(74) Representative: Glawe, Delfs, Moll & Partner
(86) International application number: PCT/JP2003/004796
(87) International publication number: WO 2003/088691

(57) **Abstract**

There is provided a radio access communication system capable of shortening a communication interruption time period even if no radio-base-station control station exits when a radio terminal is handed over from a radio base station to another. An AP #1 (2a) to which a radio terminal (1) is connected before a handover of the radio terminal (1) transfers, before the handover, a communication context directly to an AP #2 (2b) to which the radio terminal (1) is to be connected after the handover. At the handover of the radio terminal (1), the AP #2 (2b) has already held the communication context required for communication with the radio terminal (1).

## Description

### TECHNICAL FIELD

The present invention relates to a radio access communication system, a radio base station, and a handover control method and a program thereof for use with them, and more particularly to a seamless handover supporting method for a radio terminal in a radio access communication system.

### BACKGROUND ART

In recent years, wireless LAN (Local Area Network) systems standardized by IEEE 802.11 standardization organization have been widely utilized by virtue of a reduction in cost of devices and the like.

Even operators have recently emerged to provide internet access services through radio link connections by installing a plurality of APs (Access Point) outdoors, not only for enterprise networks and home networks, to locally set up cells.

In areas in which cells have been set up even locally, a radio terminal can continuously utilize a radio link connection, even it moves from one cell to another, by changing AP to which it is connected. In the following, a change of AP to be connected, associated with a movement of a radio terminal for continuously utilizing a radio link connection is called "handover."

On the other hand, when public services are provided using radio communications, it is extremely important to prevent wiretapping of and fraudulent accesses to data transmitted by a user, and performed for this purpose are authentication of a radio terminal at the outset of an access (initial authentication), periodic authentication of a radio terminal (re-authentication), key-based data encryption, and periodic exchange of encryption keys.

Therefore, when a radio terminal hands over from one AP to another, the authentication of the radio terminal and exchange of encryption keys must be performed even with a new AP to be connected, thus requiring a time for resuming transmission/reception of data. As such, IEEE 802.11 has investigated a protocol, called IAPP (Inter Access Point Protocol), for transferring a communication context established between oAP (old AP) connected before a handover and a radio terminal to nAP (new AP) to which the radio terminal is to be connected after the handover.

With this protocol, a radio terminal can resume data transmission/reception soon even after a handover by re-using a communication context in nAP. However, IAPP is based on the premise that a radio terminal searches by itself for a connectable AP. As a radio terminal detects a connectable AP, the radio terminal sends a connection request to nAP, and nAP, which receives the connection request, requests oAP to transfer a communication context.

On the other hand, in cellular systems such as W-CDMA (Wideband-Code Division Multiple Access) system, a communication context is transferred between nodes on a network as well when a radio terminal hands over. In this event, the communication context is transferred through the intermediation of an AP control station which is positioned upstream of AP, or a core node which is positioned further upstream of the AP control station.

In the conventional radio access communication system described above, since nAP requests oAP to transfer the communication context after it has received the connection request from the radio terminal, the communication experiences a long instantaneous interruption time.

Also, in the conventional radio access communication system, when a communication context is transferred through the AP control station positioned upstream of AP, the communication context cannot be transferred unless the AP control station exists.

Further, while IAPP can transfer a plurality of different types of information on a radio terminal at the same time, it cannot transfer communication contexts which exist in plural per radio terminal such as QoS (Quality of Service) information per flow.

### DISCLOSURE OF THE INVENTION

It is therefore an object of the present invention to solve the problems mentioned above and provide a radio access communication system, a radio base station, and a handover control method and a program thereof for use them, which are capable of reducing a communication interrupted time period even if no radio-base-station control station exists when a radio terminal is to hand over from one radio base station to another.

Also, it is another object of the present invention to provide a radio access communication system, a radio base station, and a handover control method and a program thereof for use with them, which are capable of transferring communication contexts which exist in plural per radio terminal from one radio base station to another when a radio terminal hands over from the one radio station to the other.

A radio access communication system according to the present invention is a radio access communication which includes a plurality of radio base stations, and a radio terminal capable of communicating with the radio base stations, wherein:
each of the plurality of radio base stations comprises transfer means operative when the radio base station is connected to the radio terminal before a handover for changing a radio base station to which the radio terminal connects, for transferring a communication context required for a communication with the radio terminal to another radio base station to which the radio terminal is connected after the handover.

In another radio access communication system according to the present invention, the communication context comprises a plurality of pieces of context information of different types in the configuration described above.

A radio base station according to the present invention is a radio base station which is capable of communicating with a radio terminal, wherein:
the radio base station has transfer means operative when the radio base station is connected to the radio terminal before a handover for changing a connection partner of the radio terminal, for transferring a communication context required for a communication with the radio terminal to another connection partner of the radio terminal after the handover.

In another radio base station according to the present invention, the communication context comprises a plurality of pieces of context information of different types in the configuration described above.

A handover control method according to the present invention is a handover control method for a radio access communication system including a plurality of radio base stations and a radio terminal capable of communicating with the radio base stations, wherein each of the plurality of radio base station is provided with the step of transferring a communication context required for a communication with the radio terminal from a radio base station connected to the radio terminal before a handover for changing a radio base station to which the radio terminal connects to another radio base station to which the radio terminal is connected after the handover.

In another handover control method according to the present invention, the communication context comprises a plurality of pieces of context information of different types in the step described above.

A program for a handover control method according to the present invention is a program for a handover control method for a radio access communication system including a plurality of radio base stations and a radio terminal capable of communicating with the radio base stations. The program causes a computer to execute processing for transferring a communication context required for a communication with the radio terminal from a radio base station connected to the radio terminal before a handover for changing a radio base station to which the radio terminal connects to another radio base station to which the radio terminal is connected after the handover.

Another program for a handover control method according to the present invention causes a computer to execute processing for transferring a communication context comprising a plurality of pieces of context information of different types when the computer is caused to execute the processing for transferring the communication context.

Specifically, in the radio access communication system of the present invention, before a radio terminal hands over, a radio base station [hereinafter abbreviated as "AP" (Access Point)] in connection is notified of an AP which is to be connected after the handover, such that the AP in connection directly transfers a communication context to the AP to be connected, thus permitting the AP to be connected to reuse the transferred communication context after the handover.

By doing so, in the present invention, when a radio terminal hands over from one AP to another, a communication unavailable time period can be reduced even if no AP control station exists upstream of the APs.

In another radio access communication system of the present invention, a transferred communication context comprises a plurality of pieces of context information of different types related to the radio terminal, and a context information identifier, and the context information comprises a sub-context identifier and sub-context information.

By doing so, in the present invention, a plurality of communication contexts of the same type can be transferred between radio base stations when a radio terminal hands over from one AP to another.

### BRIEF DESCRIPTION OF THE DRAWINGS

Fig. 1 is a block diagram illustrating the configuration of a radio access communication system according to one embodiment of the present invention;
Fig. 2 is a block diagram illustrating the configuration of a radio terminal in Fig. 1;
Fig. 3 is a block diagram illustrating the configuration of AP (#1) 2a in Fig. 1;
Fig. 4 is a block diagram illustrating the configuration of AP (#2) 2b in Fig. 1;
Fig. 5 is a diagram showing the structure of a context table held in context holder units in Figs. 3 and 4;
Fig. 6 is a diagram showing a format for a communication context included in a context transfer notification signal in Fig. 4;
Fig. 7 is a sequence chart representing the operation of the radio access communication system during a handover in accordance with one embodiment of the present invention;
Fig. 8 is a sequence chart representing the operation of the radio access communication system during a handover in accordance with one embodiment of the present invention;
Fig. 9 is a sequence chart representing the operation of the radio access communication system during a handover in accordance with one embodiment of the present invention; and
Fig. 10 is a sequence chart representing the operation of the radio access communication system during a handover in accordance with one embodiment of the present invention.

### BEST MODE FOR CARRYING OUT THE INVENTION

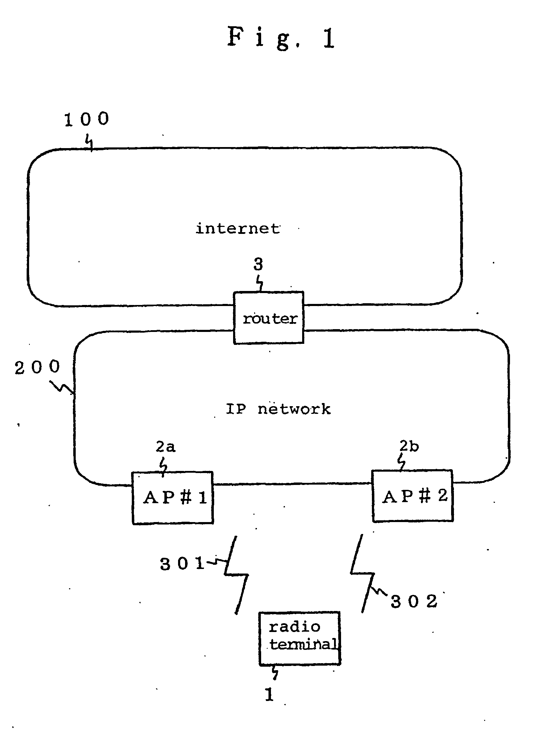

Next, embodiments of the present invention will be described with reference to the drawings. Fig. 1 is a block diagram illustrating the configuration of a radio access communication system according to one embodiment of the present invention. In Fig. 1, the radio access communication system according to one embodiment of the present invention has two APs (Access Points) (#1, #2) 2a, 2b connected to Internet 100 through router 3.

AP (#1, #2) 2a, 2b are nodes in which a router function is integrated with a radio base station function, and AP (#1, #2) 2a, 2b can communicate with radio terminal 1 through radio channels 301, 302, respectively, based on IEEE 802.11 wireless LAN (Local Area Network) standard.

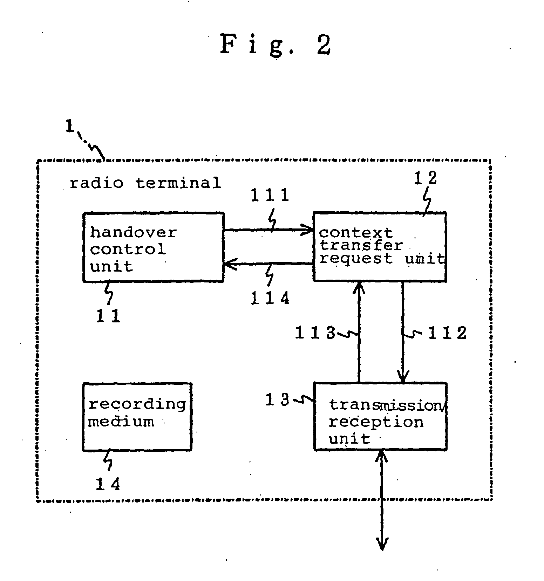

Fig. 2 is a block diagram illustrating the configuration of radio terminal 1. In Fig. 2, radio terminal 1, which is mainly implemented by a computer, comprises handover control unit 11, context transfer request unit 12, transmission/reception unit 13, and recording medium 14. Handover control unit 11, context transfer request unit 12, and transmission/reception unit 13 are respectively implemented by a computer which executes a program stored on recording medium 14.

Upon determination of a handover, handover control unit 11 sends context request 11 to context transfer request unit 12, and in response to this, context transfer request unit 12 generates context transfer request signal 112 which is transmitted to AP (#1) 2a through transmission/reception unit 13.

On the other hand, upon receipt of context response signal 113 through transmission/reception unit 13, context transfer request unit 12 notifies handover control unit 11 of the result included in context response signal 113 as context response 114.

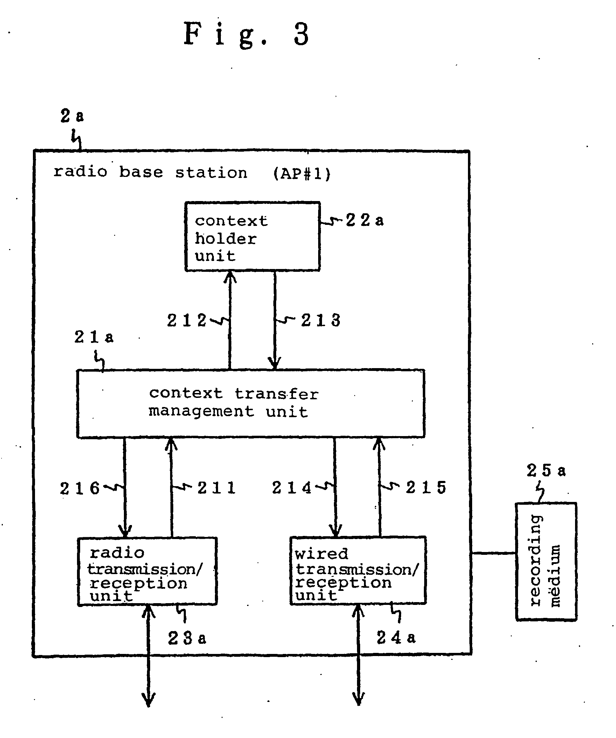

Fig. 3 is a block diagram illustrating the configuration of AP (#1) 2a in Fig. 1. In Fig. 3, AP (#1) 2a, which is mainly implemented by a computer, comprises context transfer management unit 21 a, context holder unit 22a, radio transmission/reception unit 23a, wired transmission/reception unit 24a, and recording medium 25a. Context transfer management unit 21 a is implemented by a computer which executes a program stored on recording medium 25a.

Upon receipt of context request signal 211 through radio transmission/reception unit 23a, context transfer management unit 21 a sends context information request 312 to context holder unit 22a for requesting a communication context related to radio terminal 1 which has transmitted context request signal 211.

Context holder unit 22a notifies context transfer management unit 21a of all communication contexts related to specified radio terminal 1 as context information response 213. Upon receipt of context information response 213, context transfer management unit 21 a generates context transfer notification signal 214 using this context information response 213 for transmission to AP (#2) 2b through wired transmission/reception unit 24a.

Also, upon receipt of context transfer acknowledge signal 215 from AP (#2) 2b through wired transmission/reception unit 24a, context transfer management unit 21a transmits context transfer response signal 216 to radio terminal 1 through radio transmission/reception unit 23a for indicating that the communication contexts have been transferred.

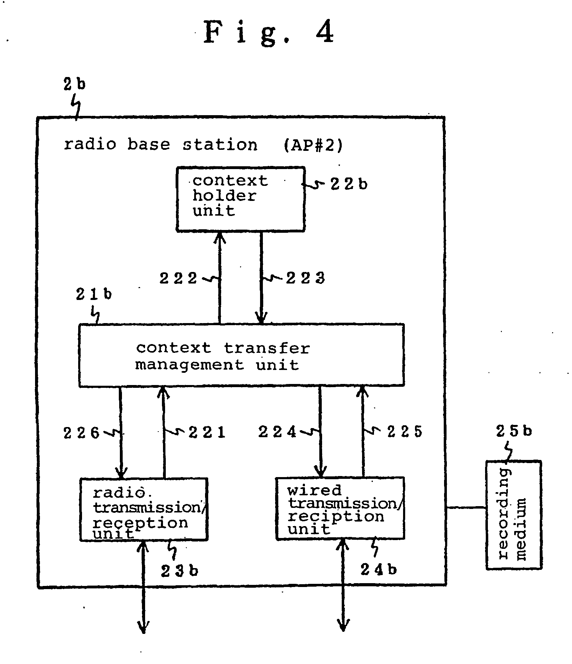

Fig. 4 is a block diagram illustrating the configuration of AP (#2) 2b in Fig. 1. In Fig. 4, AP (#2) 2b, which is mainly implemented by a computer, comprises context transfer management unit 21b, context holder unit 22b, radio transmission/reception unit 23b, wired transmission/reception unit 24b, and recording medium 25b. Context transfer management unit 21b is implemented by a computer which executes a program stored on recording medium 25b.

Upon receipt of context transfer notification signal 225 through wired transmission/reception unit 24b, context transfer management unit 21b of AP (#2) 2b reads communication contexts included in context transfer notification signal 225, sends them to context holder unit 22b as context information notification 222. Upon receipt of context information acknowledge signal 223 from context holder unit 22b, context transfer management unit 21b generates context transfer acknowledge signal 224 which is transferred to AP (#1) 2a through wired transmission/reception unit 24b.

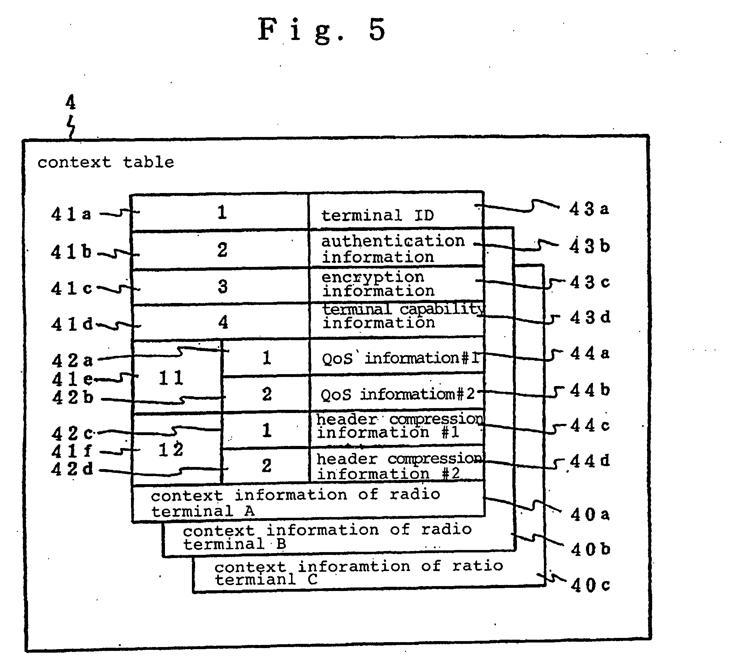

Fig. 5 is a diagram showing the structure of a context table held in context holder unit 22a in Fig. 3 and in context holder unit 22b in Fig. 4. In Fig. 5, context table 4 holds context lists 40a, 40b, 40c which are communication contexts per radio terminal.

Context list 40a is comprised of four pieces of context information 43a, 43b, 43c, 43d and four pieces of sub-context information 44a, 44b, 44c, 44d.

Each context information 43a, 43b, 43c, 43d is managed/identified by context information identifier 41a, 41b, 41c, 41d, while each sub-context information 44a, 44b, 44c, 44d is managed/identified by both context information identifier 41e, 41f and sub-context information identifiers 42a, 42b, 42c, 42d.

In the example shown in Fig. 5, "terminal ID" is held as context information 43a; "authentication information" as context information 43b; "encryption information" as context information 43c; and "terminal capability information" as context information 43d, respectively.

Also, in the example described above, "QoS (Quality of Service) information #1 is held as sub-context information 44a; "QoS information #2" as sub-context information 44b; "header compression information #1" as sub-context information 44c; and "header compression information #2" as sub-context information 44d, respectively.

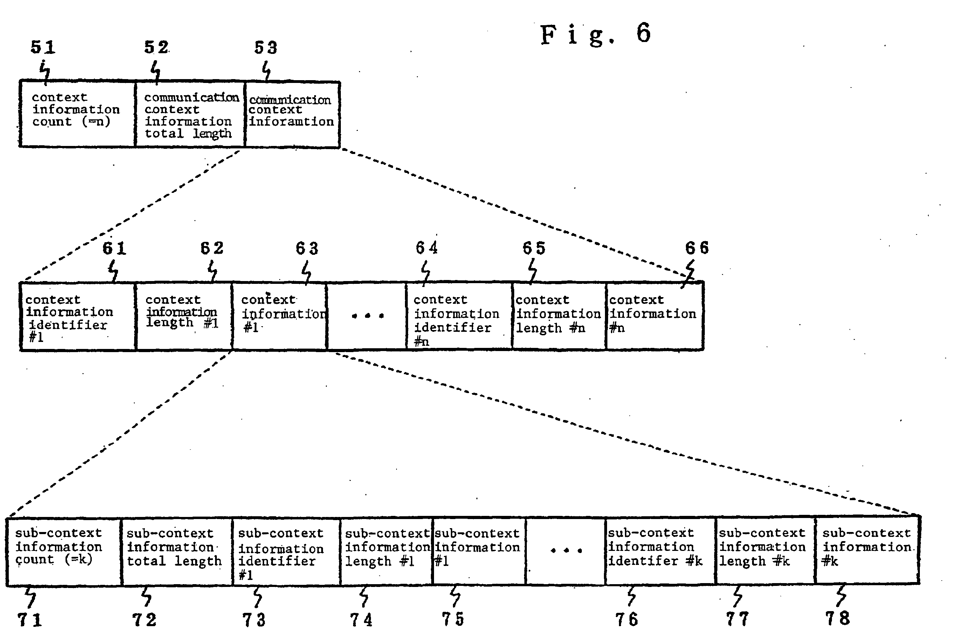

Fig. 6 is a diagram showing a format for a communication context included in context transfer notification signal 225. In Fig. 6, the communication context is comprised of context information count (=n) 51, communication context information total length 52, and communication context information 53.

Communication context information 53 is comprised of n (n is a positive integer) contexts which are combinations of context information identifiers (#1 - #n) 61, 64, context information lengths (#1 - #n) 62, 65, and context information (#1 - #n) 63, 66. One communication context can be contained in this context information for transfer.

Context information (#1) 63 can also be comprised of k contexts which are combinations of sub-context information identifiers (#1 - #k) 73, 76, sub-context information lengths (#1 - #k) 74, 77, and sub-context information (#1 - #k) 75, 78; sub-context information count (=k) 71; and sub-context information total length 72.

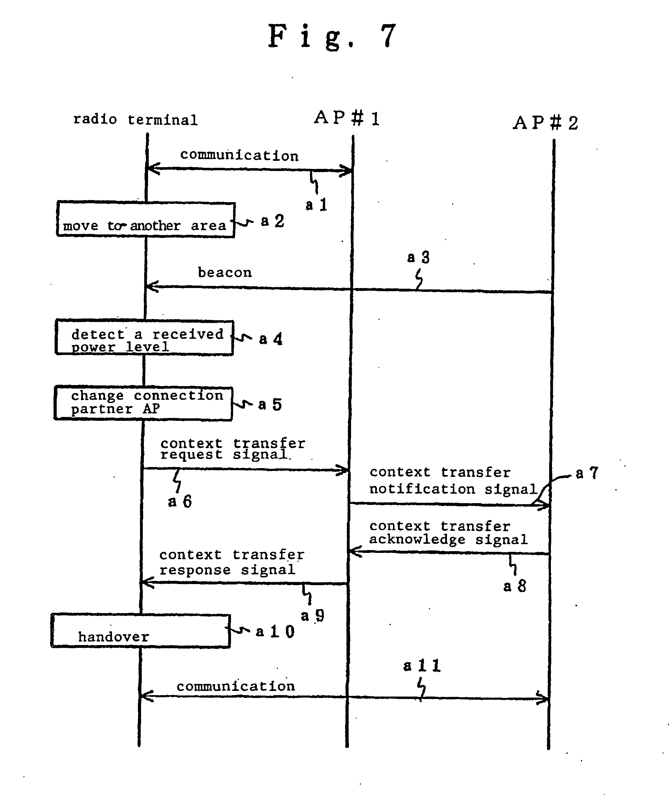

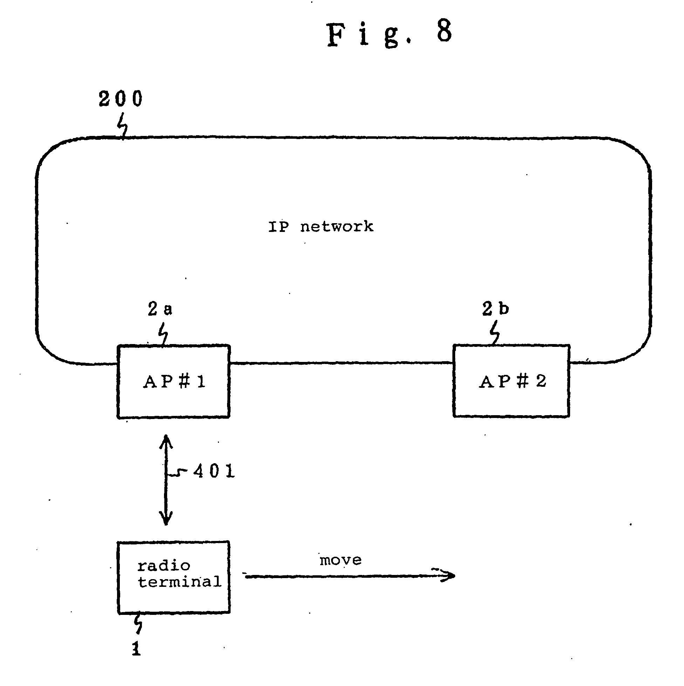

Fig. 7 is a sequence chart representing the operation of the radio access communication system during a handover in accordance with one embodiment of the present invention. Figs. 8 - 10 are diagrams representing the operation of the radio access communication system during a handover in accordance with one embodiment of the present invention. Referring to these Figs. 7 to 10, description will be made on the operation of the radio access communication system during a handover in accordance with one embodiment of the present invention.

The operation of radio terminal 1 and APs (#1, #2) 2a, 2b illustrated in Fig. 7 can be implemented by executing programs on recording media 14, 25a, 25b by computers which constitute radio terminal 1 and APs (#1, #2) 2a, 2b.

Assume now that radio terminal 1, which is making a communication 401 with AP (#1) 2a (step a1), has moved to an area in which radio terminal 1 can communicate with AP (#2) 2b (step a2), as illustrated in Fig. 8.

Radio terminal 1 receives a beacon transmitted by AP (#2) 2a (step a3), and as it detects that a received power level of a signal transmitted by AP (#2) 2b is better than reception characteristics of a signal transmitted by AP (#1) 2a (step a4), determines to change its connection partner to AP (#2) 2b (step a5). Here, the beacon refers to control information informed by APs (#1, #2) 2a, 2b to all radio terminals 1 connected thereto.

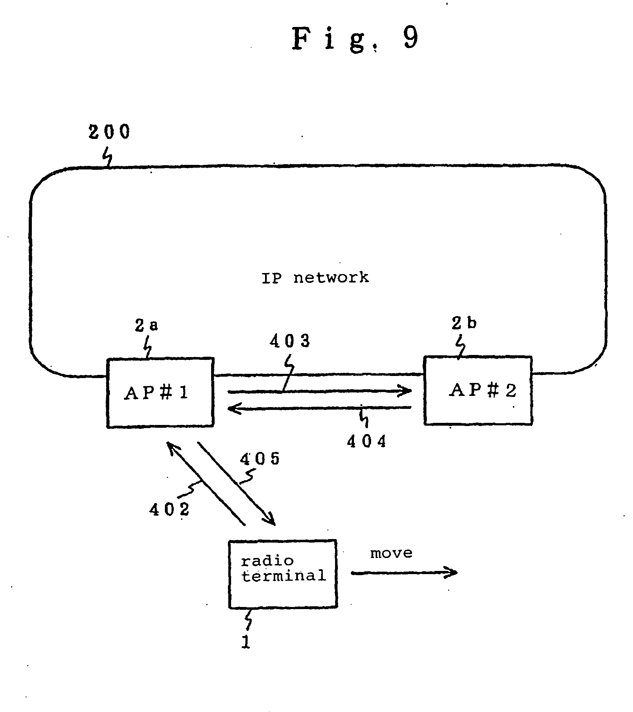

Afterward, radio terminal 1 transmits context transfer request signal 402 including the identifier of AP (#2) 2b to AP (#1) 2a (step a6), as illustrated in Fig. 9. In response to this, AP (#1) 2a transmits to AP (#2) 2b context transfer notification signal 403 which includes communication contexts established during previous communications with radio terminal 1 (step a7).

In this embodiment, when terminal capability information indicative of functions of radio terminal 1, authentication information, encryption information, QoS information, and header compression information are utilized as context information, or when QoS information is utilized as context information, a flow identifier is contained in the sub-context information identifier; and at least one of flow identification information, a minimally ensured bandwidth, maximally utilized bandwidth, minimally ensured delay time, maximally allowable delay time, minimally ensured delay jitter, and maximally allowable delay jitter is contained in the sub-context information, and when header compression information is utilized as context information, header compression identifier is contained in the sub-context information identifier; and at least one of header information to be compressed; and a mask value indicative of the position of a header to be compressed in the sub-context information.

When the communication context can be correctly received, AP (#2) 2b transmits context transfer acknowledge signal 404 to AP (#1) 2a for indicating that a connection to radio terminal 1 is permitted (step a8).

Upon receipt of context transfer acknowledge signal 404, AP (#1) 2a transmits context response signal 405 to radio terminal 1 for indicating the completion of the transfer of the communication contexts.

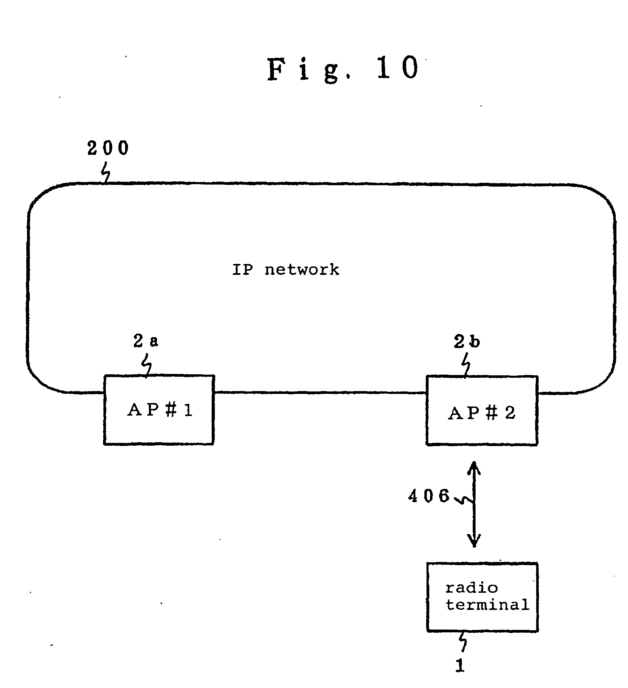

In this way, radio terminal 1, which has handed over, starts a communication with AP (#2) 2b (steps a10, a11), as illustrated in Fig. 10, and makes use of the communication contexts in context transfer notification signal 403 which has been transferred from AP (#1) 2a to AP (#2) 2b before the handover, thus making it possible to smoothly resume the communication.

In the foregoing description, one embodiment of the present invention has been described, but it goes without saying that this embodiment is not limited to these embodiments, and a variety of conversions can be made within the scope of the present invention. For example, while this embodiment has shown an example of two APs (#1, #2) 2a, 2b as exemplary connection switching, three or more APs can also be selectively switched.

Also, while the operation has been shown for a terminal-driven handover, it is also possible to perform a network-driven handover. While the received power level is used for determining a handover, a bit error rate, or a frame error rate can be applied as well.

While the form shown above is such that APs (#1, #2) 2a, 2b directly communicate with radio terminal 1, the present invention can be applied to a topology in which a relay node exists between APs (#1, #2) 2a, 2b and radio terminal 1 for performing only radio/wired interface conversion, so that radio communications are made between the relay node and radio terminal, whereas wired communications are made between the relay node and APs.

In this way, this embodiment can reduce a communication unavailable time period even when no AP control station is positioned upstream of AP (#1, #2) 2a, 2b when radio terminal 1 is to hand over between APs (#1, #2) 2a, 2b by previously directly transferring, before the handover of radio terminal 1, communication contexts from AP (#1) 2a, which has been connected to radio terminal 1 before the handover, to AP (#2) 2b, to which radio terminal 1 is to be connected after the handover.

Also, in this embodiment, a communication context to be transferred is comprised of a plurality of pieces of context information, and the context information can be further comprised of a plurality of pieces of sub-context information, so that a plurality of communication contexts of the same type can be transferred between APs (#1, #2) 2a, 2b when radio terminal 1 is to hand over between APs (#1, #2) 2a, 2b.

## Claims

1. A radio access communication system including a plurality of radio base stations, and a radio terminal capable of communicating with said radio base stations, said system **characterized in that**:
each of said plurality of radio base stations has transfer means operative when each said radio base station is connected to said radio terminal before a handover for changing a radio base station to which said radio terminal connects, for transferring a communication context required for a communication with said radio terminal to another radio base station to which said radio terminal is connected after the handover.

2. The radio access communication system according to claim 1, wherein said communication context comprises a plurality of pieces of context information of different types.

3. The radio access communication system according to claim 1, wherein said transfer means is responsive to a request from said radio terminal for transferring said communication context to the radio base station to which said radio terminal is connected after the handover.

4. The radio access communication system according to claim 1, wherein said communication context is transferred between said radio base stations in one of a one-to-one communication or a one-to-multiple communication at the handover of said radio terminal.

5. The radio access communication system according to any of claims 1 to 4, wherein:
said communication context comprises a plurality of pieces of context information of different types related to said radio terminal, and a context information identifier; and
said context information comprises a sub-context identifier and sub-context information.

6. The radio access communication system according to claim 5, wherein said context information includes at least one of terminal capability information indicative of functions of said radio terminal, authentication information corresponding to said radio terminal, encryption information, communication quality information indicative of a communication service quality, and header compression information utilized when a header of transmission/reception data is compressed.

7. The radio access communication system according to claim 5, wherein said sub-context information includes at least one of data flow identification information, an ensured delay time, a requested delay time, an ensured communication bandwidth, and a requested bandwidth.

8. The radio access communication system according to claim 5, wherein said sub-context information includes at least one of compressed header information, and mask information indicative of a position of a header to be compressed.

9. A radio base station capable of communicating with a radio terminal, **characterized in that**:
said radio base station has transfer means operative when said radio base station is connected to said radio terminal before a handover for changing a connection partner of said radio terminal, for transferring a communication context required for a communication with said radio terminal to another connection partner of said radio terminal after the handover.

10. The radio base station according to claim 9, wherein said communication context comprises a plurality of pieces of context information of different types.

11. The radio base station according to claim 9, wherein said transfer means is responsive to a request from said radio terminal for transferring said communication context to a radio base station to which said radio terminal is connected after the handover.

12. The radio base station according to claim 9, wherein said communication context is transferred between said radio base stations in one of a one-to-one communication and a one-to-multiple communication at the handover of said radio terminal.

13. The radio base station according to any of claims 9 to 12, wherein:
said communication context comprises a plurality of pieces of context information of different types related to said radio terminal, and a context information identifier; and
said context information comprises a sub-context identifier and sub-context information.

14. The radio base station according to claim 13, wherein said context information includes at least one of terminal capability information indicative of functions of said radio terminal, authentication information corresponding to said radio terminal, encryption information, communication quality information indicative of a communication service quality, and header compression information utilized when a header of transmission/reception data is compressed.

15. The radio base station according to claim 13, wherein said sub-context information includes at least one of data flow identification information, an ensured delay time, a requested delay time, an ensured communication bandwidth, and a requested bandwidth.

16. The radio base station according to claim 13, wherein said sub-context information includes at least one of compressed header information, and mask information indicative of a position of a header to be compressed.

17. A handover control method for a radio access communication system including a plurality of radio base stations and a radio terminal capable of communicating with said radio base stations,
said method **characterized by** comprising the step of providing each of said plurality of radio base stations with a step of transferring a communication context required for a communication with said radio terminal from a radio base station connected to said radio terminal before a handover for changing a radio base station, to which said radio terminal connects, to another radio base station to which said radio terminal is connected after the handover.

18. The handover control method according to claim 17, wherein said communication context comprises a plurality of pieces of context information of different types.

19. The handover control method according to claim 17, wherein said step of transferring a communication context includes transferring said communication context to a radio base station to which said radio terminal is connected after the handover in response to a request from said radio terminal.

20. The handover control method according to claim 17, wherein said communication context is transferred between said radio base stations in one of a one-to-one communication and a one-to-multiple communication at the handover of said radio terminal.

21. The handover control method according to any of claims 17 to 20, wherein:
said communication context comprises a plurality of pieces of context information of different types related to said radio terminal, and a context information identifier; and
said context information comprises a sub-context identifier and sub-context information.

22. The handover control method according to claim 21, wherein said context information includes at least one of terminal capability information indicative of functions of said radio terminal, authentication information corresponding to said radio terminal, encryption information, communication quality information indicative of a communication service quality, and header compression information utilized when a header of transmission/reception data is compressed.

23. The handover control method according to claim 21, wherein said sub-context information includes at least one of data flow identification information, an ensured delay time, a requested delay time, an ensured communication bandwidth, and a requested bandwidth.

24. The handover control method according to claim 21, wherein said sub-context information includes at least one of compressed header information, and mask information indicative of a position of a header to be compressed.

25. A program for causing a computer to execute a handover control method for a radio access communication system including a plurality of radio base stations and a radio terminal capable of communicating with said radio base stations,
said program **characterized by** causing a computer to execute processing for transferring a communication context required for a communication with said radio terminal from a radio base station connected to said radio terminal before a handover for changing a radio base station, to which said radio terminal connects, to another radio base station to which said radio terminal is connected after the handover.

26. The program according to claim 25, causing a computer to execute processing for transferring a communication context comprising a plurality of pieces of context information of different types when said computer is caused to execute the processing for transferring the communication context.
